# EUROPEAN PATENT SPECIFICATION

(11) **EP 0 993 847 B1**
(45) Date of publication and mention of the grant of the patent: **31.03.2004**
(21) Application number: 99307983.9
(22) Date of filing: 11.10.1999
(51) Int. Cl.: A63F 13/00, G10H 1/00

(54) **Game system and computer readable recording medium storing program for executing music game**
Spielsystem und computerlesbares Aufzeichungsmedium für Musikspielprogramm
Système de jeu et support d'enregistrement pour programme d'exécution du jeu

(30) Priority: 13.10.1998 JP 29100098
(43) Date of publication of application: 19.04.2000
(73) Proprietor: Konami Corporation, Chiyoda-ku, Tokyo 100-6330 (JP)
(72) Inventor: Wada, Toshifumi, Shinjuku-ku, Tokyo (JP)
(74) Representative: Haley, Stephen

(56) References cited:
- EP-A- 0 709 771
- EP-A- 0 823 270
- US-A- 5 092 216
- PATENT ABSTRACTS OF JAPAN vol. 1998, no. 08, 30 June 1998 (1998-06-30) & JP 10 069273 A (YAMAHA CORP), 10 March 1998 (1998-03-10) & US 5 902 948 A (HARUYAMA KAZUO) 11 May 1999 (1999-05-11)

## Description

The present invention relates to a game system having a configuration that enables a player to enjoy performing operations to music.

At present, game systems are commercially available, which provide players with fun derived from directing music by mixing sound effects with music played as BGM (Back Ground Music), as seen in DJ (Disc Jockey), or adding an ad-lib performance to music. For example, a product "Hiphop Mania" produced by Konami Co. Ltd. is one such typical example. Direction, rendering, or performance that are to be mixed with BGM are previously memorized as score data. Thus, how faithfully a player performs operations with following the score data is evaluated and the evaluation is reflected in the result of games.

However, the conventional game systems have not the configuration which makes players input new score data or delete some score data. Namely players are not allowed to produce score data at their own free will.

An object of the present invention is to provide a game system that enables a player to freely produce score data defining performance procedures and make the player enjoy the game more actively.

According to one aspect of the present invention, there is provided a game system comprising:
a data storage device for respectively memorizing data for replaying music and data defining performance procedures for the music;
a performance operating device for receiving performance operations of a player;
a music replaying device for replaying the music based on the data for replaying the music;
a performance operation instructing device for instructing the player to input performance operations associated with the replay of the music based on the data defining the performance procedures;
a performance effect generating device for generating performance effects corresponding to said performance operations
characterised by:
a data inputting device for inputting or deleting at least part of the data defining the performance procedures in response to operations of the player, in that
the data formed through the data inputting device are stored into the data storage device and the performance operation instructing device instructs the player to do predetermined performance operations based on the data input through the data inputting device.

Since there is provided the data inputting device for inputting or deleting at least part of the data defining the performance procedures in response to operations of the player, and the performance operation instructing device can instruct the player to do predetermined performance operations based on data input through the data inputting device, the player can freely form the data defining the performance, rendering or rendering procedures, and can enjoy the game more actively.

The game system may further comprise a device for storing a plurality of types of sound effects to be generated as the performance effects.

Since it is possible to use a plurality of types of sound effects stored in the device, the performance effect can be enhanced.

In the game system, one type of the sound effects to be generated as the performance effects may be selected in accordance with an operation of the player, when the data defining the performance procedures are input through the data inputting device.

Since the type of effect sounds is selected according to the will of the player, the player can enjoy the game more deeply.

In the game system, a selected sound effect may be replayed when said one type of the sound effects is selected in accordance with the operation of the player.

The replay performed when the type of sound effects has been selected enables the player to confirm the sound effects actually.

The game system may further comprise an indicating device for showing a position residing in the music to be subjected to input or deletion of the data, when the data defining the performance procedures are input or deleted in a piece of the music by the player through the data inputting device.

Since a position to be objective for the input or deletion of the data is instructed by the instructing device, the input of the data and others can be done steadily.

The game system may further comprise a replaying device for replaying the sound effects based on the data defining the performance procedures when the data defining the performance procedures are input or deleted through the data inputting device.

In this case, the sound effects according to the data that define performance procedures are replayed by the replaying device, resulting in that the player can confirm the performance effects derived based on the data formed by him or herself.

In the above game system, the replaying device may replay a series of the sound effects to be used as the performance effects after completing the operations of the player to input or delete the data defining the performance procedures. The replaying device may replay the sound effects with mixing the music.

Based on the above configurations, the sound effects are replayed with being mixed with a piece of the music, so that the player can surely confirm the sound effects.

The game system may further comprise a range setting device for setting, in accordance with an operation of the player, a range of the sound effects to be replayed through the replaying device to an extent corresponding to at least part of a piece of the music. Thus, the sound effects can be replayed within only in the range that the player desires.

In the above game system, the data inputting device may be constructed such that the data are input by making the player repeat operations of assigning the respective sound effects corresponding to each of the performance operations composing the performance procedures, and the replaying device can replay each of the input sound effects every time the player assigns the sound effects to each of the performance operations.

Thus, whenever the sound effects are input responsively to each performance operation, the player can confirm the input sound effects.

In the above game system, the data storage device may memorize data defining a plurality of sets of the performance procedures for one piece of the music. Thus it is possible for the player to enjoy a plurality of types of performance operations concerning each piece of the music.

In the above game system, the data memorized in the data storage device and defining the performance procedures corresponding to a specific piece of the music may be all input through the data inputting device.

In the above game system, the performance operating device may be used as the data inputting device and the performance operations instructed through the performance operation instructing device may be the same as player's operations performed in inputting the data defining the performance procedures.

Therefore, the same operations as performance operations make it possible to input the data. In consequence, the procedures for inputting the data can be simplified.

The game system may further comprising: an input-position pointing device for indicating a position in a piece of the music at which the data are input or deleted, when the player inputs or deletes the data defining the performance procedures corresponding to the piece of the music through the data inputting device; and an indicator having at least one track extending in a specified direction, wherein the performance operation instructing device displays, based on the data defining the performance procedures, an indication mark to indicate operation timing of the performance operating device within the indicator in such a manner that the indication mark moves along the track and then reaches a performance operation position fixedly set at a specified location of the track when the operation timing of the performance operating device corresponding to the indication mark comes, and the input-position pointing device displays, within the indicator, a pointing mark to show a position existing in the music at which the data are input or deleted in such a manner that the pointing mark moves along the track and is located at an input-operation position fixedly set at a specified location of the track when the data inputting device is operated correspondingly to the pointing mark.

Because the pointing mark is located at an input-operation position fixedly set at a specified location of the track when the data inputting device is operated correspondingly to the pointing mark.

Because the pointing mark is located at an input-operation position fixedly set at a specified location of the track, when the data inputting device is operated correspondingly to the pointing mark, the player can surely input the data and perform other operations.

According to the present invention there is also provided a computer-readable storage medium storing data for replaying music, data defining performance procedures for the music, and a program for performing a predetermined music performing game based on both of the data, the program being formed to allow a computer to perform the following steps of:
replaying the music based on the data for replaying the music;
instructing a player to input performance operations associated with the replay of the music to a performance operating device based on the data defining the performance procedures for the music;
generating performance effects corresponding to said performance operations; and characterised by the steps of:
   inputting or deleting at least part of the data defining the performance procedures and memorizing an input or deleted result data in response to operations of the player; and
   pointing predetermined performance operations to the player based on the memorized data.

As described above, it is possible to give the player instructions about predetermined performance operations based on the data newly formed in response to player's operations, thereby allowing the player to freely form the data and enjoy the game more satisfactorily.

To facilitate the understanding of the present invention, typical references shown in the accompanying drawing have been attached with the parentheses to the main constituents of the present invention as above. However the present invention is, of course, not to confined to the modes shown in the embodiments.

in the accompanying drawings:
Fig. 1 is a block diagram showing an embodiment into which the present invention is practised as a home-use game machine;
Fig.2 explains the relationship between BGM data recorded in the CD-ROM in Fig.1 and score data recorded in association with the BGM data;
Fig.3 shows a fundamental game picture for a music-directing game executed by the game system shown in Fig.1;
Fig.4 is an enlarged view showing an indicator displayed at each end of the game picture;
Fig.5 is a flowchart showing a main routine executed by the game system of Fig.1;
Fig.6 is a diagram showing one example of a table defining the relationship between operations to a controller and sound effects to be generated in response to the operations in the game system of Fig.1;
Fig.7 is an explanation showing a display picture on a monitor in inputting score data;
Fig.8 is a flowchart representing a main routine of the processing when in an edit mode;
Fig.9 shows a flowchart of BGM selection processing;
Fig.10 is an explanation indicating another display picture on the monitor when in the BGM selection processing;
Fig.11 is a flowchart showing score-data new-forming processing;
Fig.12 is a flowchart showing sound effect selection processing;
Fig.13 is a flowchart showing data preservation processing;
Fig.14 is a flowchart showing score-data editing processing;
Fig.15 is a flowchart showing score-data new-forming processing in a second embodiment of the present invention;
Fig.16 is a view showing a configuration of a dedicated controller;
Fig.17 is a display picture on the monitor when in the BGM selection in cases the controller of Fig.16 is used; and
Fig.18 is a display picture on the monitor when in inputting score data in cases the controller of Fig.16 is used.

### (First Embodiment)

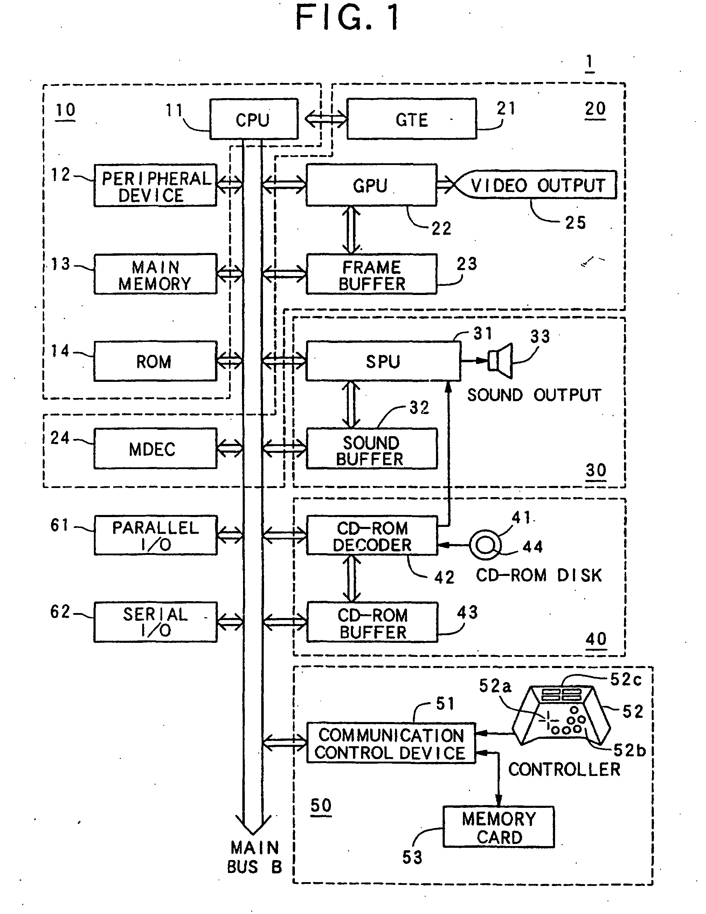

Fig. 1 shows a first embodiment into which a home-use game system according to the present invention is practiced. The configuration shown in Fig.1 is based on a general configuration adopted in a typical home-use computer game system which is disclosed in detail by Japanese Patent Unexamined Publication 8-212377, for example.

The game system 1 shown in Fig.1 is provided with a main control part 10, graphic control part 20, sound control part 30, disk reading part 40, and communication control part 50, where the parts 10 to 50 are mutually connected via a main bus B. The main control part 10 comprises a CPU 11 main constructed by a microprocessor for executing calculations necessary for advancing a game and for controlling each part of the system, a peripheral device 12 for interrupt control to the CPU 11 and auxiliary control such as access to memories, a main memory 13 composed of semiconductor memory elements such as relodable RAM and others, and a ROM which memorizes programs for controlling the basic operations of the game system 1.

The graphic control part 20 comprises a geometry transfer engine (GTE) 21, serving as a coprocessor, for executing specific calculation necessary for image rendering in response to commands from the CPU, for example, the calculation of coordinates of polygons used to express three-dimensional images and other; a graphics processing unit (GPU) 22 executing specific rendering processing in response to rendering commands issued from the CPU 11; a frame buffer 23 functioning as temporary memory means for data rendered by the GPU 22; and an image decoder (MDEC) 24 decoding compressed data of images which has been stored in the main memory 13. Under progress of a game, image data which have been recorded in a CD-ROM 44 as a storage medium are loaded into the main memory 13 as is needed, and decoded by the MDEC 24, and rendered into the frame buffer 23 by the GPU 22. Any region in image frames rendered in the frame buffer 23 is displayed on a monitor 25 serving as display means, which is the CRT of a home-use TV set, for example.

The sound control part 30 has a sound production processing processor (SPU) 31 for generating music sounds, sound effects and others based on commands provided by the CPU 11; a sound buffer 32, having a memory capacity of 512 kilobytes, for example, into which data of audio, music sounds and others and data of sound sources, those data being read from the CD-ROM 44; and a speaker 33 serving as sound output means outputting music sounds, sound effects and others generated by the SPU 31.

The SPU 31 has an ADPCM encoding function by which audio data which have undergone an adaptive differential encoding (ADPCM) process are reproduced, in which 16-bit audio data are handled as 4-bit differential signals; a replaying function for generating sound effects and others by replaying data of sound sources stored in the sound buffer 32; a modulating function for modulating audio data to be replayed and others memorized in the sound buffer 32; and other necessary functions. That is, the SPU 31 possesses functions for automatic conversion of operation parameters including coefficients of looping and time, incorporates therein an ADPCE sound source having a capability of 24 voices, and operates responsively to operations provided from the CPU 11. Furthermore, the SPU 31 administers an inherent address space mapped in the sound buffer 32 to transfer ADPCM data into the sound buffer 32. Accordingly, the data are replayed with information about both "off" or "on" of keys, and modulation passed directly to the sound buffer.

These functions make it possible that the sound control part 30 is used as a source, called sampling sound source, which generates music sounds, sound effects and others using audio data stored in the sound buffer 32, in response to commands from the CPU 11.

The disk reading part 40 is provided with a disk drive 41 replaying programs, data and others stored in the CD-ROM 44, a decoder 42 decoding programs, data and others stored with error correction code (ECC), and a buffer 43, having a memory capacity of 32 kilobytes, for example, temporarily storing data replayed by the disk driver 41. In other words, the disk reading part 40 is configured by components required for reading data from disks, which includes the disk drive 41, decoder 42 and the like. In this embodiment, disk formats are prepared to support data formatted into, for example, CD-DA and CD-ROM XA. In addition, the decoder 42 functions part of the sound control part 30.

Audio data stored in disks, which are to be replayed by the disk drive 41, include data referred to as PCM data formed by analog-to-digital converting audio signals, in addition to the foregoing ADPCM data (such as ADPCM data for CD-ROM XA and others). As ADPCM data, audio data are used which are, for example, recorded with differentials of 16-bit digital data expressed by four bits. Such audio data are subject to error correction and decoding in the decoder 42, before being sent to the SPU 31 where they undergo processing such as digital-to-analog conversion. The processed data are then used for driving the speaker 33. As PCM data, audio data are recorded in the form of, for example, 16-bit digital data. Such audio data are decoded in the decoder 42, and used to drive the speaker 33. Audio outputs from the decoder 42 are temporarily sent to SPU 31 where the audio outputs are mixed with the SPU outputs, and provided as the final audio outputs through a reverb unit.

The communication control part 50 has a communication control device 51 controlling communication carried out toward the CPU 11 using the main bus B; a controller 52 which is used as operation input means and which has a plurality of operating members (for example, push button switches) operated by a player; and a memory card 53 (auxiliary storage medium) whose main constituents are reloadable and loadable semiconductor elements. In the controller 52, there are provided a performance operating portion 52a used for instructing the right, left, up, and down directions, and selection operating portions 52b and 52c composed of a plurality of push button switches, respectively. A variety of functions are assigned to operated members of each of the operating portion 52a to 52c according to conditions in the progress and setting of a game. Signals indicative of operated conditions for the operating members are outputted from the controller 52 at given periods (for example, 60 times per second). The outputted signals are sent to the CPU 11 via the communication control device 51. In Fig.1, although only a single set of controller 52 and memory card 53 have been expressed, a plurality of sets of controller 52 and memory card 53 can be arranged as the communication control device 51.

Furthermore, the game system 1 has a parallel I/O (input/output) port 61 and a serial I/O port 62 to which peripheral devices are connected. Other game systems are possible to be connected with the serial I/O port 62 through communication cables not shown, thereby making it possible to perform a common game between two game systems with data communicated therebetween.

When the CD-ROM 44, which has recorded therein programs and data required for performing games according to the present invention, has been set into the disk reading part 40, and an initializing operation (for example, the power "on", a not-shown reset switch "on") has been carried out, the CPU 11 starts to perform a specified music play game in accordance with programs stored in the CD-ROM 44. Those music play games are outlined such that data of BGM which have been recorded in the CD-ROM 44 are reproduced in the sound control part 30, while a player is requested to operate the controller 52 in conformity with procedures set to the BGM. Sound effects in response to operations from the player are mixed with the BGM, and outputted from the speaker 33.

The data of BGM are recorded in the CD-ROM 44 in the format of, for instance, CD-DA or CD-ROM XA. Under the formats, each piece of music is divided into an appropriate volume of data to be recorded. Each of the divided data includes information indicative of play time (for example, time information of channel Q on the CD standard) for each divided data, this time being defined from the top of each piece of music set as a reference. Making use of information indicating the play time, the game system shown in Fig.1 is able to specify the elapsed time from the beginning of a specified piece of music and start to replay BGM based on data corresponding to the specified time.

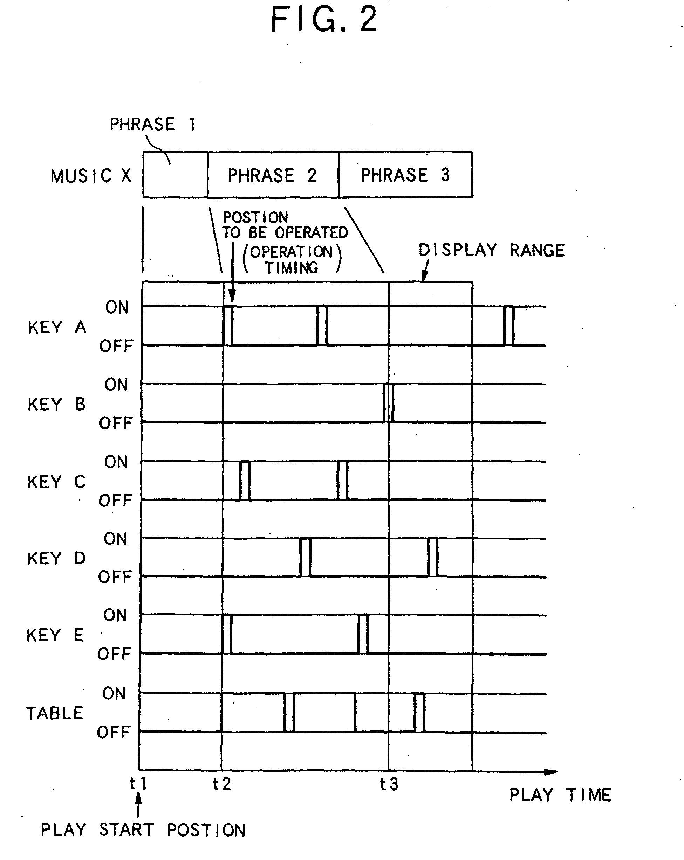

Into the CD-ROM 44, also included are score data defining operation procedures of the controller 52 for each piece of BGM. Fig.2 exemplifies score data written in the form of timing chart, corresponding to music X as a piece of BGM recorded in the CD-ROM 44. In the score data, as the operating members of the controller 52 which are to be operated in time to the music X, five keys A to E and one table are prepared. In forming the score data, for each of the keys A to E and table, determined are that a player should operate at which position in the music X. The determined operating position is converted into an elapsed time measured from the top of the music X along the time axis (corresponds to the lateral axis in the figure) of which reference is the top of the BGM. The converted time is processed into data to be recorded in the CD-ROM 44. The music X, which is BGM, is composed of a plurality of phrases, and separated times t1, t2, t3, ... of each phrase are recorded in the score data in association with phrase numbers, respectively. The phrase numbers are serial numbers placed in the order of play of the phrases, with the initial phrase being numbered as 1. Moreover, the score data also include information specifying sound effects which are to be generated when each operating position is reached. The data of sound effects are recorded in the CD-ROM 44 as sound effect data, separately from both the BGM data and the score data, whereas information specifying which sound effect is used at each operated position in Fig. 2 is recorded in the score data.

The score data which have been recorded in the CD-ROM 44 are, as needed, read into the main memory 13 to be used in the game. However, in an edit mode later described, score data input by a player are written in a specified area of the main memory 13, and handled in the same way as the score data previously recorded in the CD-ROM 44.

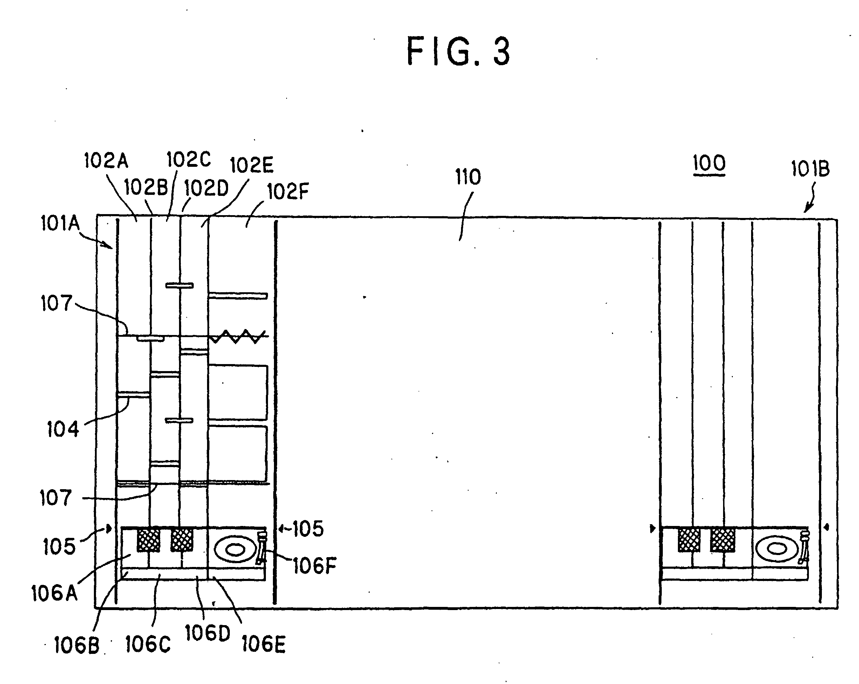

Fig.3 shows a basic game picture of a music play game executed in accordance with the programs stored in the CD-ROM 44. A game picture 100 provides a pair of indicators 101A and 101B for instructing to players the operation timing of the controller 52 and a main display area 110 located between the indicators. Such pair of indicators 101A and 101B are prepared for a situation in which two players use separate controllers 52 to play concurrently with each other. Even in this case, it is possible to show operation timing to each player independently. When a single player plays, either of the indicators is used solely. For example, in the case of Fig.2, the left indicator 101A is used alone, while the right indicator 101B is unused. Since the right and left indicators 101A and 101B are identical in the configuration, a reference number 101 is used representatively to show the indicator whenever it is unnecessary to distinguish the both indicators from each other.

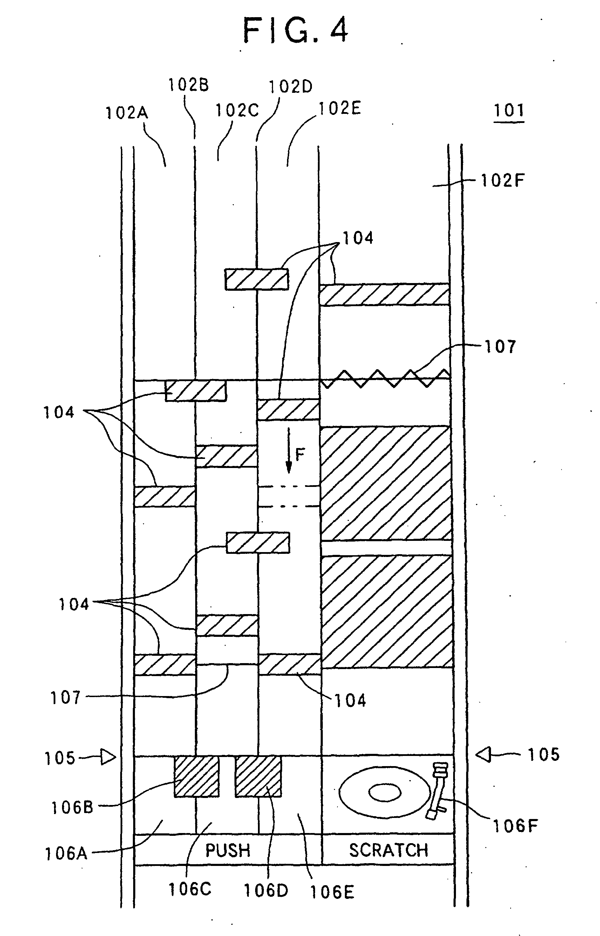

As detailed in Fig.4, the indicator 101 has six tracks 102A to 102F extending in the up and down direction. Of these, the tracks 102B and 102D are placed on lines partitioning the tracks 102A, 102C and 102E.

Each of the tracks 102A to 102F is made to correspond to different operating members on the controller 52. By way of example, the track 102A is made to correspond to an operating member of the performance operating portion 52a, the tracks 102C, 102E and 102F to mutually different push button switches of the selection operating portion 52b, and the tracks 102B and 102D to mutually different push button switches of the selection operating portion 52c, respectively. The track 102F is dedicated to operations of a scratch play, that is, a play by which a phonograph record on the turntable of an analog player is turned by the hand to be scratched against a needle, producing peculiar sound effects. Thus, it is preferred that an operating member made to correspond to the track 102F reminds a player of turn operations of the phonograph record. For instance, a joystick-like operating member rotatable 360 degrees by hand may be added to the controller 52 shown in Fig.1, and the added member can be made to correspond to the track 102F.

In Fig . 2 , the keys A to E of the score data are made to correspond to the tracks 102A to 102E one by one, and the table F is made to be correspond to the track 102F. The correspondence relationship between the keys A to E and the tracks 102A to 102E may be changeable.

Timing marks 104 ,..., 104 are displayed in the tracks 102A to 102F on the basis of the score data shown in Fig.2 in order to instruct the player operation timing for the operating members of the controller 52 which are made to correspond to the tracks. Specifically, when in performing a game, the CPU 11 reads a certain range of data, which are mapped in a range going forward from the current time (that is, an elapsed time from the start of a play) to a certain coming time, from the score data in Fig.2 as data of a display range in the indicator 101. The timing marks 104 are displayed at positions on the tracks 102A to 102F corresponding to operational timings included in the display range, with both the time axis of the score data and the upper and lower axes of the indicator 101 made to correspond to each other so that the start point of the display range, that is, the current time comes to the positions of lower-end cursors 105 and 105 of the indicator 101 and the end of the display range comes to the upper ends of the indicator 101. Furthermore, in the case that the score data include the separations of the phrases, the CPU 101 works to display on the indictor 101 separation lines 107 showing the phrase separations.

When the CPU 11 repeats the foregoing processing at properly given intervals, the timing marks 104 are gradually moved downward on the tracks 102A to 102F, as shown by an arrow F in Fig.4 (refer to a two-dotted line displayed on the track 102E). Where one timing mark 104 reaches an operational position shown by the lower cursor 105 of each of the tracks 102A to 102F, operational timing has come to each of the operational members of the controller 52 corresponding to the tracks 102A to 102F. When a player operates a given operating member at this timing, a proper sound effect is mixed with a piece of the BGM. Data for the sound effects are recorded in the CD-ROM 44 in advance. Data expressing the relationship between the operations to the controller 52 and the sound effects generated responsively to the operations are also recorded in the CD-ROM 44. These data are loaded into the main memory 13; as desired.

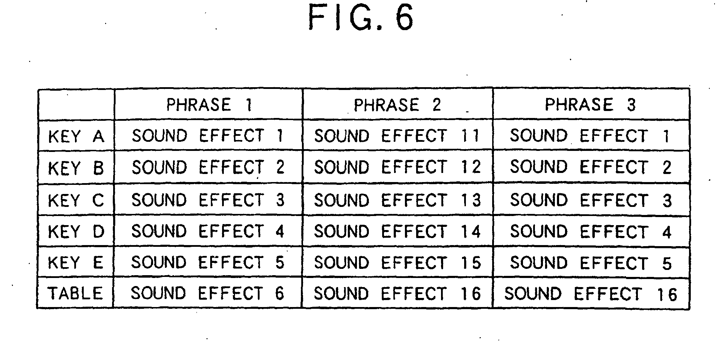

Fig.6 exemplifies a table formed in the main memory 13 based on data memorized in the CD-ROM 44, in the case that sound effects are changed phrase by phrase. According to the table, the sound effects to be generated every phrase are assigned to the keys A to E and the table F, respectively.

Displayed at the lower ends of the tracks 102A, 102C and 102E are icons 106A, 106C and 106E that imitate white keys of a keyboard instrument, and displayed at the lower ends of the tracks 102B and 102D are icons 106B and 106D imitating its black keys.

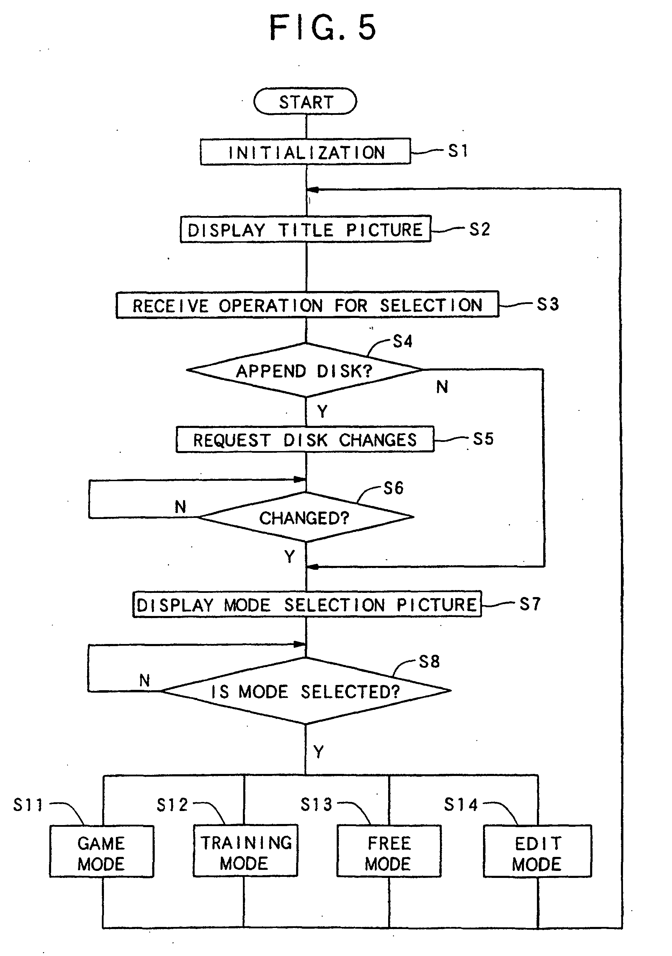

Fig.5 is a flowchart showing a main routine executed by the CPU 11 for performing music play games based on the programs written in the CD-ROM 44. Of the programs and data recorded in the CD-ROM 44, their necessary parts are loaded in the main memory 13. When this loading has been done, the CPU 11 initializes various parameters on the loaded programs (Fig. 5, step S1), and displays a specified title picture on the monitor 25 (step S2). Commands selectable by the player are represented in the title picture in a menu format. The selectable commands include a designation of an arcade mode in which a game is played on the data recorded in the CD-ROM 44 and another designation of a mode in which a game is played on data recorded in an append CD-ROM disk different from the foregoing CD-ROM disk 44. The pieces of music and score data corresponding thereto recorded in the append disk are different from those recorded in the CD-ROM 44. In the CD-ROM 44, the programs for controlling the game are recorded, while no such data are recorded in the append disk. The append disk can, therefore, serve as a storage medium storing the BGM data and the score data that cannot be recorded due to limitation in the capacity of the CD-ROM 44.

At the next step S3, a player's operation to the controller 52 is received, then whether or not the player specifies a game mode based on the append disk is determined (step S4). When such game mode is specified, the CPU 11 requests the changes of disks for the player via display on the monitor 25 (step S5), and determines if the disk has been changed or not, using a signal from the disk reading part 40 (step S6). If the disk change has been done, the processing proceeds to step S7. When it is determined at step S4 that the append disk is not requested, the processing is routed to step S7, skipping steps S5 and S6.

At step S7, a mode selection picture is displayed on the monitor 25. The mode selection picture, which shows modes selectable by the player, and one of a "game mode", "training mode", "free mode", and "edit mode" are selectable at this time.

At the next step S8, it is determined whether the player has selected any mode through the controller 52. If the determination is affirmative, that is, one of the modes has been selected, the processing advances to one of steps corresponding to the selected mode (step S10, S11, S12 or S13). After completing the processing of the selected mode, the processing is returned to step S2.

The game mode of step S11 handles a mode for playing ordinary music play games. Specifically, in the game mode, a piece of BGM is produced from the speaker 33 from the disk reading part 40 through the sound control part 30, and the timing marks 104 are displayed within the indicator 101 in association with the BGM (refer to Figs. 3 and 4). When the player operates the controller 52 in association with the display of the marks, the sound effect corresponding to each operation is generated with being mixed with the BGM. The player can therefore enjoy playing music. In the game mode, each player's operation during the play of the BGM is compared with the score data to evaluate how faithfully the player has operated on the score data. Game results are compared with using evaluated results as a scale.

The training mode at step S12 is provided for exercising the play in the game mode. That is, in the training mode, one example is that the player can exercise about only his or her weak phrases through the repetition of the play.

In the free mode at step S13, the player can freely play to in accordance with the BGM, and the sound effects corresponding to the operation of the controller 52 are generated with being mixed with the BGM.

The edit mode at step S14 is a mode for allowing the player to input score data. By making it possible to newly forming and editing score data, the player can play a variety of types of play for the same BGM, having fun with games. Also the player can enjoy original arrangements.

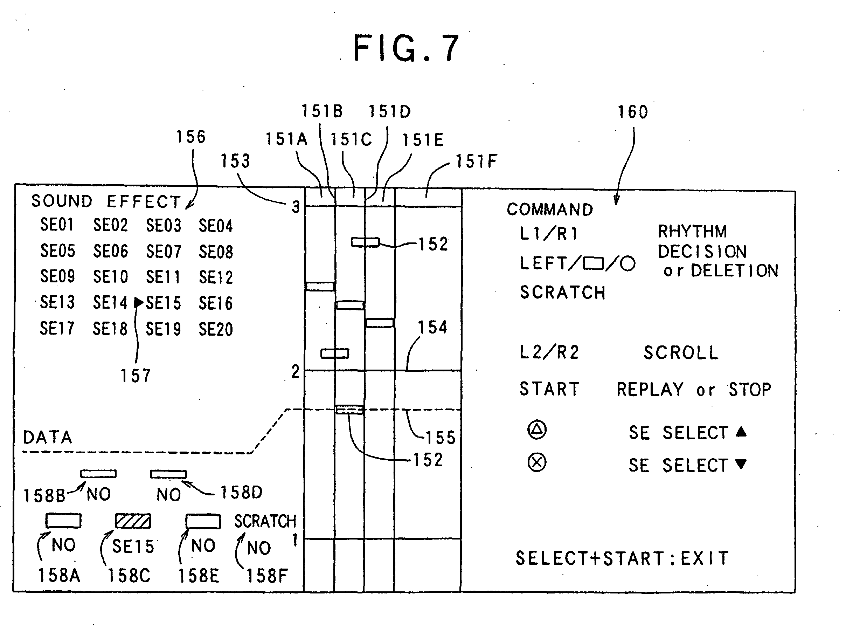

The processing of the edit mode will now be explained. Fig.7 shows a picture displayed on the monitor 25 when score data are input. Like the display of the monitor 25 shown in Figs.3 and 4, a plurality of display tracks 151A to 151F are placed in the central region of the picture in which the time axis is set vertically. Scrolling the tracks 151A to 151F vertically allows positions for setting each of sound effects composing score data (i.e., positions at which timing marks 152 are put) to be located at desired places in the displayed picture. Such scroll of the tracks 151A to 151F is brought about by player's operations. As shown in Fig.7, explanations 160 teaching how to operate are displayed in the right-side region of the tracks 151A to 151F for performing various types of operations.

Like musical scores, the tracks 151A to 151F are sectioned upwardly in turn by section lines dividing phrases, and phrase numbers 153 according to the order of the phrases are attached to each of the phrases. A musical time of each phrase corresponds to the vertical positions of the tracks 151A to 151F, so that a linear relationship between the positions and time instants is sustained for display. For instance, when one phrase is formed of four beats, a section line 154 at the head (lower end) of each phrase corresponds to the top of the first beat, another position 1/4-length apart from the lower end of each phrase corresponds to the top of the second beat, another position 2/4-length apart from the lower end of each phrase corresponds to the top of the third beat, and another position 3/4-length apart from the lower end of each phrase corresponds to the top of the fourth beat, respectively. The tracks 151A to 151F are corresponds to the operating members of the operating portions 52a to 52c, respectively.

An instruction marking 155 traversing the tracks 151A to 151F is displayed on the monitor 25. By scrolling the tracks 151A to 151F to move their desired portions at the position of instruction marking 155, and then operating the operating members of the operating portions 52a to 52c, a player can assign the sound effect at the position of the instruction marking 155 or delete it. A timing mark 152 is displayed at a position at which the sound effect is assigned. Repeating such operation permits the player to input arbitrary score data.

The score data produced by input or deletion in the edit mode are memorized into a specified region of the main memory 13, and the score data can be utilized in the other modes, similarly to the score data recorded in the CD-ROM 44 in advance. In the game mode (step S11) and training mode (step S12), the operating members of the operating portions 52a to 52c operated to input the score data are designated as the operating members to be operated during the play. Namely, the operating members of the operating portions 52a to 52c that have been operated to assign the sound effect at desired timing when in inputting the score data are to be used as the operating members that should be operated for generating the sound effects during the play.

Referring to Figs.7 to 15, the processing in the edit mode will now be explained. In the following processing, there are provided a variety of steps to allow the player to select desired items, determine them, or give any instructions, and information about operations such as the selection are given to the CPU 11 in an interactive manner such that the player operates the controller 52 with reference to pictures displayed on the monitor 25, which is a similar way to ordinary game systems. Thus, explanations of the ways of individual operations are omitted.

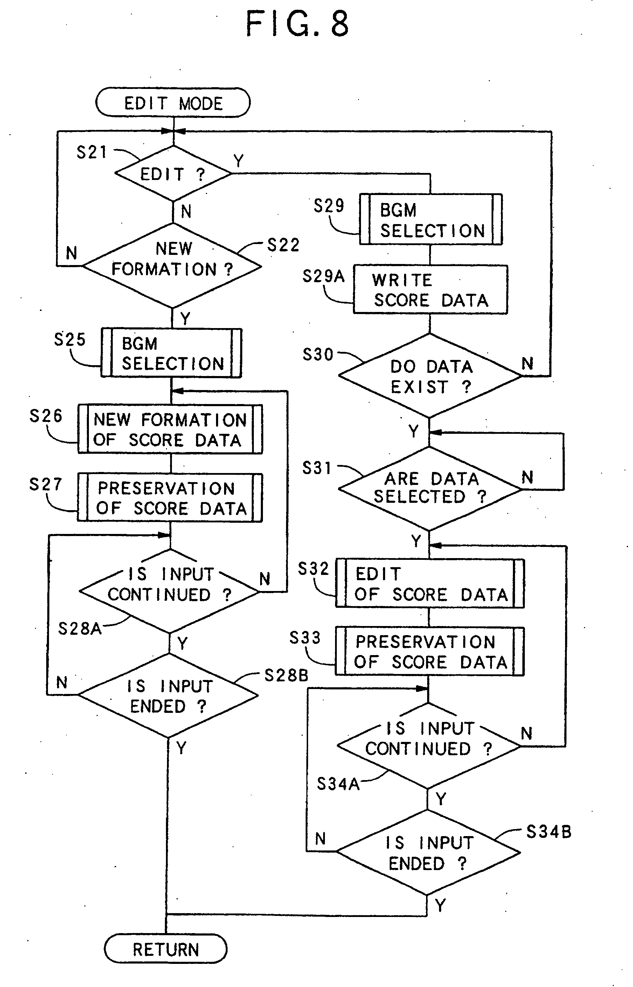

Fig.8 shows a main routine of the processing in the edit mode. At step S21 in Fig.8, a display appears on the monitor 25, which makes the player select either one of editing to alter the existing score data or forming a new score data, and the CPU 11 determines whether or not there is a selection for editing. If it is determined that editing has been selected at step S21, the processing proceeds to step S29, whereas the opposite determination thereat, that is, no selection of editing, forces the processing to proceed to step S22. At step S22, whether a new formation of the score data is selected or not is determined, and the determination that a new formation of the score data has been selected makes the processing go to step S25, but the opposite determination (no selection for the new score data formation) leads the processing to step S21.

In the case of selection for newly forming score data at step S22, the processing of the BGM selection is performed at step S25, and then the processing of the new formation of the score data is performed at the next step S26. At step S27, the processing of preservation of the input score data is performed and then the processing goes to step S28A. The processing of the BGM selection, the new formation, and the preservation will be described later. At step S28A, display to allow the player to select either the continuation of inputting score data or the end of it are provided on the monitor 25. Accordingly, it is determined whether the input continuation of the score data has been selected or not. When the input continuation is determined at step S25A, the processing returns to step S26; on the other hand, when no input continuation is determined, the processing proceeds to step S28B. At step S28B, it is determined whether or not the termination of inputting score data is selected. The determination that the input termination has been selected forces the processing to return to the main routine, while the opposite determination that the input termination has not been selected will lead the processing to step S28A.

Meanwhile, if the selection of editing score data is made at step S21, the BGM selection processing is performed at step S29, and then the processing goes to step S29A. The BGM selection processing will be detailed later. At step S29A, written into a specified area of the main memory 13 are the score data recorded in the CD-ROM 44 or the append disk related to the piece of the selected BGM, and the score data that have already been formed by the player in the edit mode. If any corresponding score data cannot be found, nothing will be written into the specified area of the main memory 13.

At step S30, the data stored in the specified area of the main memory 13 are read to determine if or not the score data are written therein. The determination that the score data for the selected piece of the BGM have been stored in the main memory 13 at step S30 allows the processing to go to step S31, on the other hand, the opposite determination, i.e., no storage of the score data, leads to a display to show such fact on the monitor 25, and then the processing returns to step S21. At step S31, a waiting process is performed until the score data are selected by player's instructions, before proceeding to step S32. Therefore, in the case that there exist a plurality of sets of the score data (stored in the specified area) for the BGM selected at step S29, the step S31 process works to wait for a player's operation to select one set of the score data from a plurality of sets of the score data. If there are only one set of the score data for the selected BGM, a player's specified operation (i.e., an operation to select this set of the score data) is waited at step S31, and then the processing goes to step S32.

At step S32, the edit processing of the score data selected at step S31 is performed, and the data preservation processing is continued for the edited data at step S33. Both the edit processing of the score data and the data preservation processing will be explained later. As the next processing, at step S34A, a display for making the player select either the continuation of score data input or the termination of the input is placed on the monitor 25, and it is determined whether or not the continuation of the score data input has been selected. When it is found at step S34A that the selection of the input continuation has been determined, the processing returns to step S32, while, when the opposite determination (i.e., no selection of the input continuation) is done, the processing proceeds to step S34B. At step S34B, it is determined whether or not the termination of the score data input has been selected or not, leading to either the return of the processing when the determination is the selection of terminating input of the score data or the return to step S34A when the opposite determination (i.e., no selection of such termination) is realized.

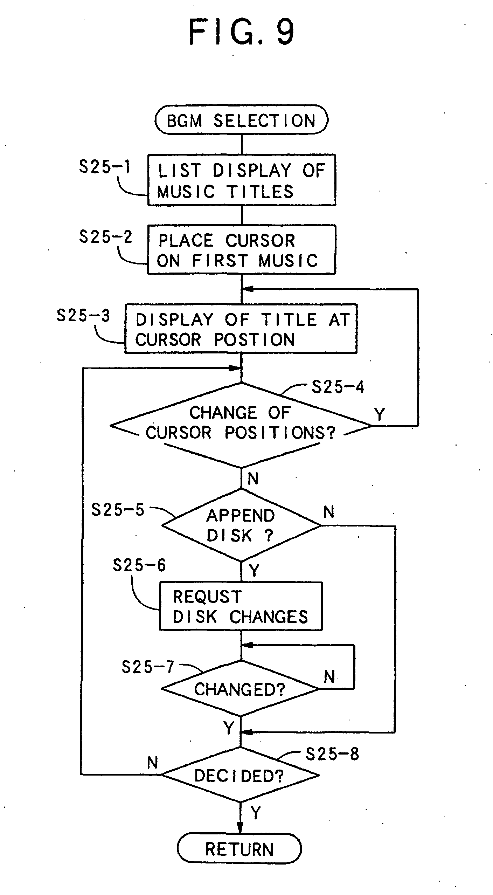

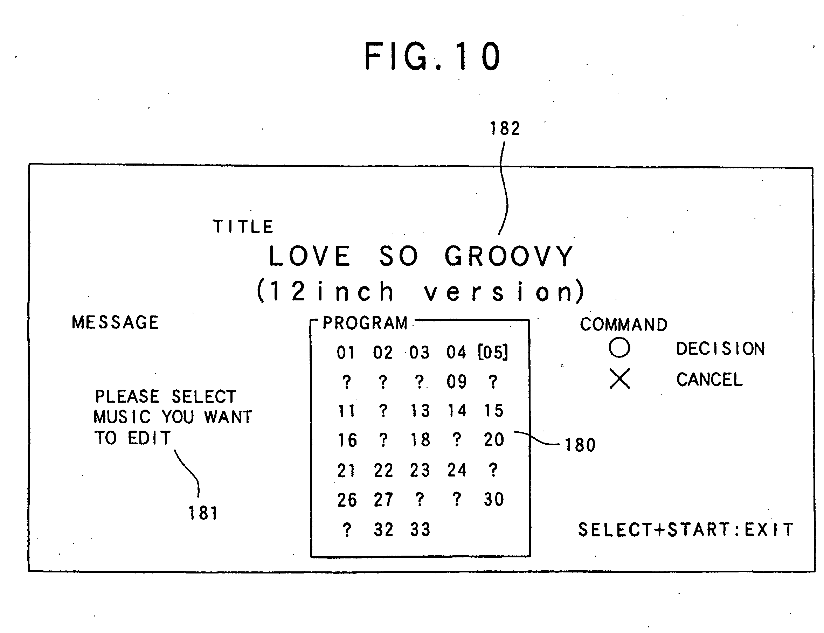

Next, referring to Fig.9, the BGM selection processing carried out at step S25 (refer to Fig.8) will now be described. By the way, with regard to the BGM selection processing at step S29 (refer to Fig.8), the similar processing is performed. Fig.10 represents a display picture on the monitor 25 in performing the BGM selection processing.

At step S25-1 of Fig.9, as shown in Fig.10, a list display 180 of pieces of BGM is shown on the monitor 25, and another display 181 instructing the player to select the number of a desired piece of BGM by inputting the music number is also shown thereon. At the next step S25-2, a cursor is placed on the first music. At step S25-3, the title of the cursor-placed music is represented on the monitor 25, and then the processing goes to step S25-4. If it is determined that a player's instruction to change the cursor position has been outputted at step S25-4, the processing returns to step S25-3; on the other hand, it is determined that such instruction has not been issued, the processing advances to step S25-5.

At step S25-5, in cases where it is determined that the player has issued an instruction for changing to the append disk, the processing is made to advance to step S25-6 where a display requesting the disk changes is provided on the monitor 25. If the disk changes are then detected on the basis of a detection signal from the disk reading part 40 at step S27-7, the processing advances to step S25-8. In contrast, if the determination that the instruction for changing to the append disk has not been issued from the player is produced at step S25-5, the processing skips to step S25-8.

When the fact that the player has performed a specified operation to decide the BGM is detected at step S25-8, the cursor-placed music is selected as the piece of the BGM, and then the processing returns to step S26 (refer to Fig.8). However, if it is determined that such operation has not been done, the processing proceeds to step S25-4.

Concerning whether the append disk is to be used or not, a chance of selecting the append disk is also given in the processing shown in Fig.5. Therefore, the processing of steps S25-5 to S25-7 may be omitted.

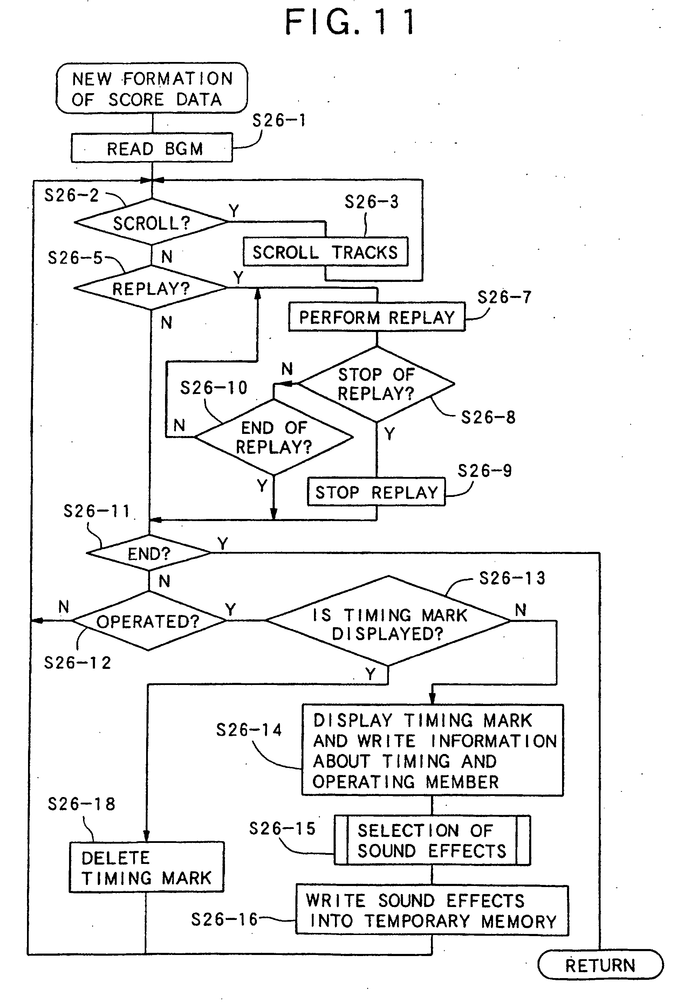

Referring to Fig.11, the processing of the new formation of the score data at step S26 (see Fig.8) will now be described. In this processing, score data of concerning all sound effects for a single piece of music are newly input.

At step S26-1 of Fig.11, data of BGM of which number is selected with the foregoing BGM selection processing (step S25) are read and the display shown in Fig.7 is provided on the monitor 25. It is then determined at step S26-2 whether or not a scroll operation of the display tracks 151A to 151F has been performed, and the processing advances to step S26-3 if it is determined that such scroll operation has been performed, but advances to step S26-5 if it is determined that such scroll operation has not been performed yet. At step S26-3, the tracks 151A to 151F are scrolled upward or downward on the monitor 25 according to operations detected at step S26-2.

At step S26-5, it is determined whether or not an operation for replay has been performed. As a result, the determination that the relay operation has been performed allows the processing to advance to step S26-7, while the determination (i.e., no replay operation) opposite to the above allows it to advance to step S26-11. The replay operation is an operation to be performed when the player desires to replay the piece of music during the course of inputting or deleting the score data by the player or after completing the input or deletion operation. According to the replay operation, the sound effects on the input score data are outputted from the speaker 33 with being mixed with the BGM. This allows the player to confirm how the piece of music currently subjected to be input is actually played.

At step S26-7, the sound effects on the input score data are outputted from the speaker 33 with being mixed with the BGM. At the next step S26-8, it is determined whether a replay stop operation has been performed or not, and then the processing advances to step S26-9 if the determination that the replay stop operation has been performed is produced, or advances to step S26-10 if the opposite determination is produced (i.e., no replay stop). This replay stop operation is an operation to be performed by the player when he or she wants to stop halfway the replay of the music. At step S26-9, the music is stopped, and the processing advances to step S26-11. At step S26-10, it is determined whether or not the replay of a single piece of music has been completed in its entirety. As a result, the determination is that such replay has been completed makes the processing go to step S26-11, while the opposite determination, that is, no completion of such replay, makes it return to step S26-7.

By the way, a range to be replayed may be specified according to a player's operation. To realize this, one example is such that the player can specify start and end positions for replay. In this case, to clarify the range to be replayed, it is preferred to put marks or any other similar objects showing the start and end positions at corresponding positions on the tracks 151A to 151F shown in Fig.7, for example.

At step S26-11, it is determined whether or not the player has performed an operation for the input termination. The determination that such operation has been performed allows the processing to return to the main routine, while the determination opposite to the above (i.e., no operation) allows it to advance to step S26-12. This input terminating operation is used for terminating the new formation of score data.

At step S26-12, it is determined whether or not any operating member of the operating portions 52a to 52c has been operated. The determination that such operation has been performed allows the processing to go to step S26-13, but the determination that such operation has not been operated makes the processing return to step S26-2. At step S26-13, it is determined whether or not the timing mark 152 is displayed at an intersection made by any track 151A (to 151F) and the instruction marking 155. When the determination that such display has been done, the processing is allowed to advance to step S26-18, while when the determination is found to be no such display, the processing is made to advance to step S26-14. One example determined at step S26-13 can be shown by Fig.7, in which it is determined that the timing mark 152 is displayed at the intersection made by the track 151C and the instruction marking 155, but the mark 152 is not displayed at the intersections made by the other tracks and the mark 155.

At step S26-14, the timing mark 152 is displayed at a position pointed by the instruction making 155 in any track 151A (to 151F) corresponding to any operating member of the operating portions 52a to 52c which has been determined as operated (refer to Fig.7). Another process is also executed at step 26-14, which is such that both timing information instructed by the instruction marking 155 and information about an operating member determined as operated at step S26-12 are written into a temporary memory incorporated within the main memory 13. In the main memory 13, the temporary memory is allocated in a different area from an area into which the score data are finally stored and used for temporarily memorizing input score data.

As shown in Fig.7, in the picture on the monitor 25, display regions 158A to 158F each corresponding to the tracks 151A to 151F are provided and the type of sound effects assigned to the timing mark 152 pointed by the instruction marking 155 is shown in any of the display region 158A to 158F each corresponding to the tracks. Fig.7 shows that the sound effects of which type is expressed as "SE15" are assigned to the timing mark 152 of the track 151C pointed by the instruction marking 155.

As the next process, the sound effect selection processing is executed at step S26-15. In this processing, the type of sound effects to be assigned to the timing mark 152 is selected, which will be detailed later. At the next step S26-16, information about the type of sound effects selected at step S26-15 is written into the temporary memory with the being associated with the previously written timing and operating member. This way of processing enables the player to arrange desired sound effects at desired timings.

On the other hand, at step S26-18, the timing mark 152 is deleted, which have existed at the position pointed by the instruction marking 155 in any track 151A (to 151F) correlated with any operating member of the operating portions 52a to 52c determined as being operated. In addition, the data of the sound effects corresponding to the deleted timing mark 152 are also deleted from the score data in the temporary memory. It is possible for the player to delete any sound effects when determined as being unnecessary.

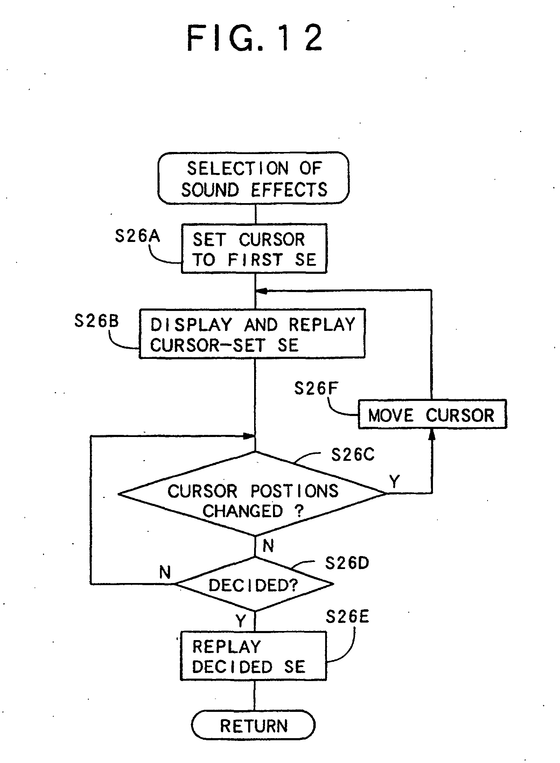

Referring to Fig.12, the sound effect selection processing shown at step S26-15 in Fig.11 will now be described. By this processing, the type of sound effects correlated to the timing mark 152 displayed at step S26-14 in Fig.11 is selected. As shown in Fig. 7, on the monitor 25, the types of sound effects are displayed in a list using a group of numbers, 156, consisting of "SE1" to "SE20", and a cursor 157 is attached to one number ("SE15" in the case of Fig.7). The player can move the cursor 157 to any number to decide it, thereby selecting desired sound effects.

At step S26A of Fig.12, the cursor 157 is set to the first sound effect "SE01", and the processing proceeds to step S26B. At step S26B, the cursor-set sound effects are displayed in the corresponding display region 158A (to 158F) and the sound effect is replayed through the speaker 33. Accordingly, the player can confirm what sound is actually generated from the cursor-set sound effect. At step S26C, it is then determined whether or not there is an operation for moving the cursor 157. If the determination is that there is such operation, the cursor 157 is moved according to the operation (step S26F), and then the processing returns to step S26B. In contrast, if the determination is no operation, the processing proceeds to step S26D, in which whether or not there is a deciding operation is determined. If such deciding operation has been done, the sound effect correlating to the cursor-set number is selected, and then the processing proceeds to step S26E, while if there has been no such operation, the processing returns to step S26C. At step S26E, the sound effect selected with the deciding operation is replayed and outputted from the speaker 33, and then the processing returns to step S26-16 of Fig.11. Hence, the player can confirm what sound is actually generated from the decided sound effect.

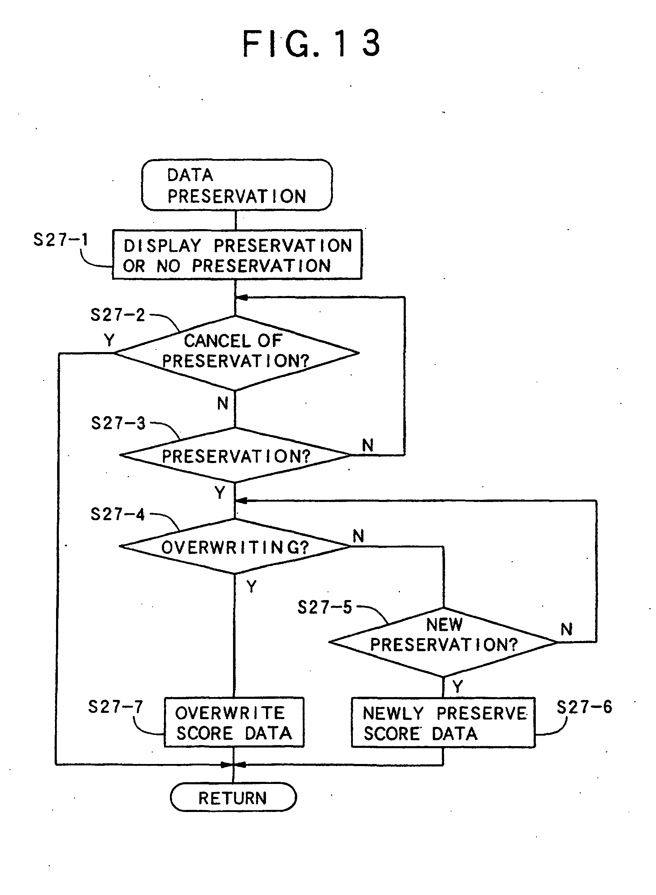

With reference to Fig.13, the data preservation processing at step S27 of Fig.8 will now be explained. This processing is executed to write into the main memory 13 the score data input through the score data new formation (step S26) and stored in the temporally memory. Owing to the fact that the data preservation processing at step S32 of Fig.8 is similar to that processed at step S27, its explanation is omitted.

At step S27-1, an instruction to let the player select either preservation or no preservation of the data is displayed on the monitor 25. At the next step S27-2, it is determined whether or not a specified operation to cancel the preservation has been done; if such cancellation has been operated, the processing returns to the main routine, while if such cancellation has not been operated, the processing proceeds to step S27-3. At step S27-3, it is determined whether or not a specified operation for preservation has been performed. When the determination is affirmative (i.e., such operation has been done), the processing goes to step S27-4, while when it is negative (i.e., no such operation), the processing returns to step S27-2. Then at step S27-4, it is determined whether or not a specified operation to command the overwriting of the score data has been done, and then the processing proceeds to step S27-7 if the determination is that such operation has been done. At step S27-7, the score data memorized in the temporary memory is overwritten on the score data recorded in the main memory 13 in association with the music being an objective for which the score data are to be input, and then the processing returns to the main routine. By this process, the original score data which has been recorded are replaced by the new score data. However, if no score data concerning the music has been recorded in the main memory 13, the score data which have been memorized in the temporary memory are written in a predetermined area of the main memory 13 assigned to the music.

On the other hand, when it is determined that the specified operation to command the overwriting of the score data has not been performed, the processing proceeds to step S27-5. At step S27-5, it is determine whether or not a specified operation to command new preservation of the score data has been done, and then the processing proceeds to step S27-6 if the determination is that such operation has been performed. At step S27-6, a new storage area is allocated in the main memory 13, the score data memorized in the temporary memory are written in this area, and then the processing returns to the main routine.

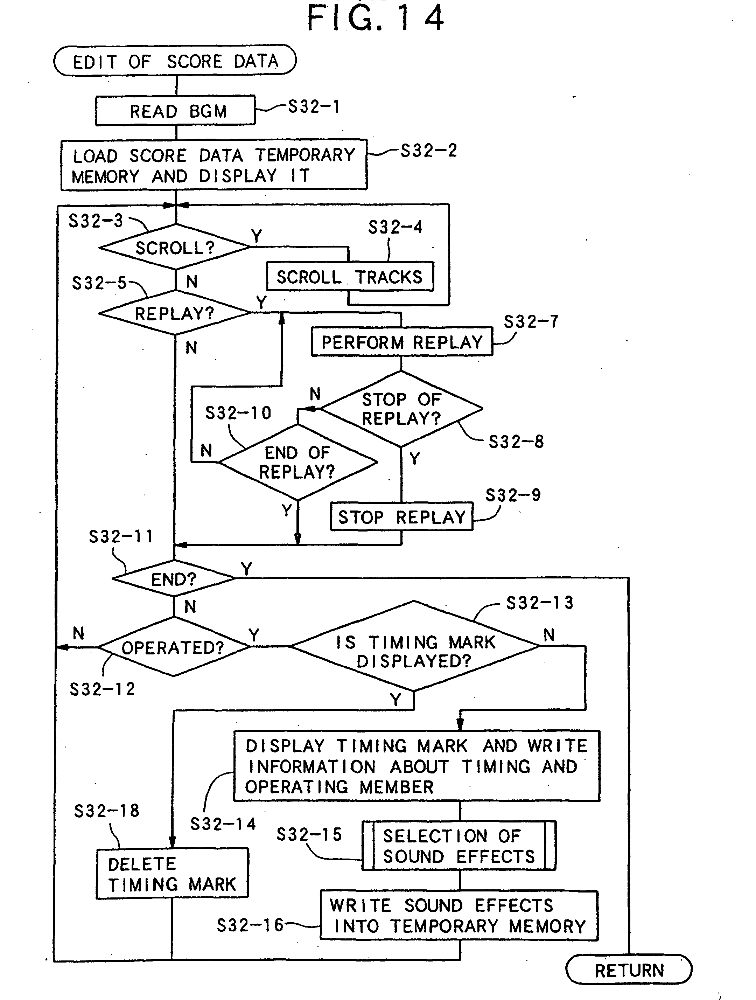

With reference to Fig.14, the score data editing processing shown at step S32 will now be described. In this processing, the score data recorded in the CD-ROM 44 or the main memory 13 are written in the temporary memory, and corrected by the player to allow the player to input new score data. Correcting already-made score data leads to an efficient input operation of the score data.

At step S32-1 of Fig.14, the data of the BGM of which number was selected by the foregoing BGM selection processing (Step S25) are read. Then at step S32-2, the score data selected at step S31 are read from the CD-ROM 44 or the main memory 13, a display picture such as shown in Fig.7 is provided from the monitor 25, and then the processing goes to step S32-3. The score data read from the CD-ROM 44 are data prepared and recorded in advance, as described above; on the other hand, the score data read from the main memory 13 are the score data input through the foregoing score-data new-forming processing or the score data edit processing and written into the main memory 13 through the data preservation processing at step S27 or S33. That is, the score data prepared and recorded in the CD-ROM 44 or the append disk in advance can be corrected to the new score data, while the score data formed by the player can also be corrected.

Step S32-3 and succeeding steps thereto are processed in a similar way to step S26-2 and succeeding steps thereto for the score-data new-formation processing explained in Fig.11, so that detailed explanation of those steps is omitted here. Like the score-data new-formation processing, the score data newly corrected and formed can be replayed to be confirmed (step S32-5 to -10), and the formed score data are written in the temporary memory (steps S32-12 to -16). Also the score data loaded in the temporary memory can be deleted (step S32-18).

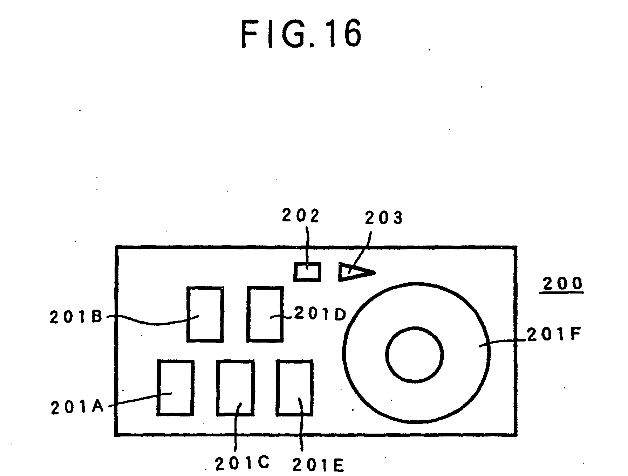

Fig.16 shows one modification of the controller. A controller 200 has, as operating members for carrying out performance operations during a game, five push button switches 201A to 201E arranged similarly to the icons 106A to 106E on the lower end of the indicator 101, and a disk-like operating member 201F arranged at the right side thereof. The operating member 201F can be operated to turn about its central portion. Pushing the operating members 201A to 201E enables signals corresponding to operations to be outputted, while turning the operating member 201F enables signals corresponding to be outputted, such as signals correlating to its turn direction and the amount of its rotation. On the upper part of the controller 200, a selection button 202 and a start button 203 are placed, both of which are formed into a push button type of switch and used for selection of games or other performances.

This controller 200 has the advantage that the correspondent relationship between the tracks 102A to 102F of the indicator 101 and the operating members 201A to 201F are clarified, an operational performance for games being improved.

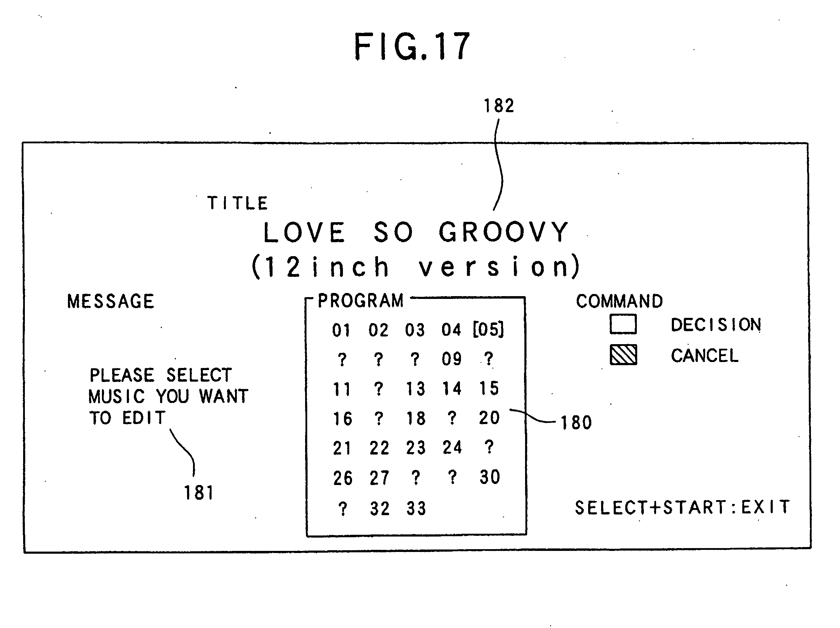

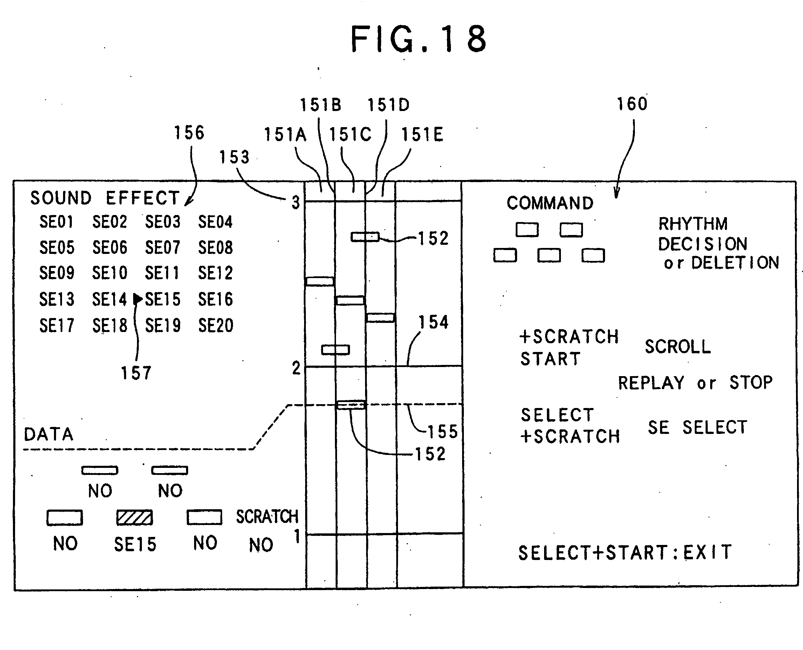

Figs.17 and 18 represent displays on the monitor 25 in cases where the controller 200 is used instead of the foregoing controller 52. Of these, Fig.17 replaces Fig.10 and Fig.18 does Fig.7. In Figs.17 and 18, identical displays to Figs.10 and 7 are represented by the same references.

By the way, in the score-data new-formation processing or score data edit processing, though the types of sound effects are made to correspond to the operating members every time when each sound effect is assigned, the sound effect may be assigned to the operating members of the operating portions 52a to 52b in advance. This simplifies the input operation of the score data. Further, in this case, it may be possible to change the assignment of the sound effects to the operating members with interruption processing.

### (Second Embodiment)

A second embodiment of the present invention will now be described.

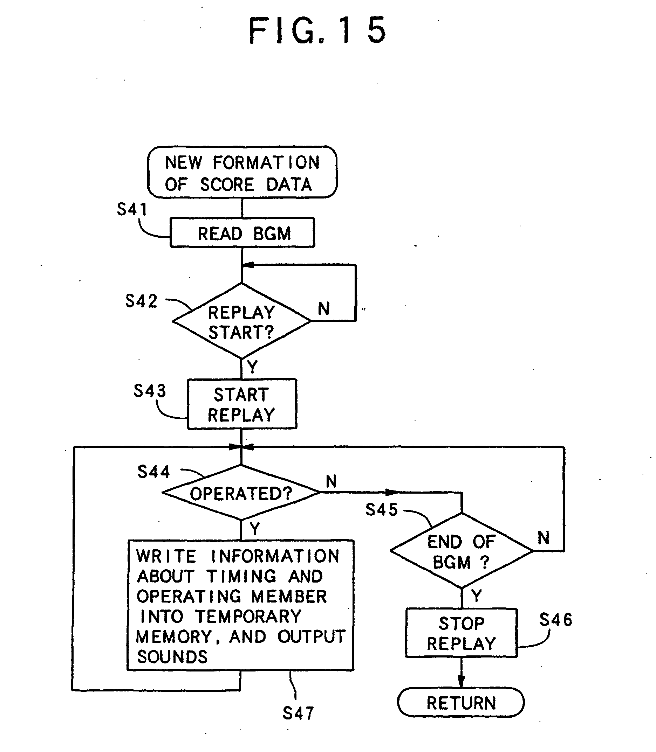

In this embodiment, score-data new-formation processing shown in Fig.15 is performed in place of that at step S26. In the processing of Fig.15, the operating members can be operated freely by the player to the BGM under replay, resulting in that score data correlating to the operations are input. Thus, the player can perform an actual play as he or her hears the BGM, resulting in that score data corresponding to the play can be formed. In consequence, it is possible to directly input, as score data, information about plays imaged by the player into the system.

With reference to Fig.15, the score-data new-formation processing will now be explained. At step S41 in Fig.15, the data of the BGM whose number is selected by the BGM selection processing (step S25) are read. At step S42, the processing waits for a specified operation for commencing the replay of the BGM, and then processing proceeds to step S43. At step S43, replaying the selected BGM starts, and then the processing goes to step S44. At step S44, it is determined whether or not the operating members are operated, and then the processing goes to step S47 when determined as being operated. At step S47, information about both the operated timing and the names of operated operating members are stored in the temporary memory, and then the processing returns to step S44. Also at step S47, the sounds corresponding to the operations to the operating members are outputted with being mixed with the BGM. In other words, depending on player's operations performed to the operating members, sound effects mixed with the BGM are outputted from the speaker 33. In this case, the types of sound effects are appropriately selectable from a table previously set in the main memory 13. Furthermore, the types of sound effects memorized as score data may be input prior to the replay of the BGM in response to specified player's operations.

When it is determined at step S44 that operating members have not been operated yet, it is also determined whether or not the replay of the BGM has ended at step S45. As a result, when determined as being the end of the replay, the processing stops the replay at step S46, and then the processing returns to its main routine, while when the replay is determined as not being ended, the processing returns to step S44.

In the game mode (step S11) and the training mode (step S12), the operating members that were operated in inputting score data are assigned to as the operating members to be operated during the replay. Namely, the operating members that were operated for arranging sound effects at given timings in the input operation of the score data provide the operating members which should be operated for generating the sound effects during the play.

In this way, information about both the operating members which has been operated and their operated timings are recorded as the score data in the temporary memory. In addition, it may be possible that the tracks shown in Fig.7 are scroll-displayed to the replay of the BGM and the timing marks are put on the tracks in sequence in association with the operations toward operating members.

Therefore, the above embodiments have various features providing a variety of features of the present invention.

One such feature is provided as follows. Owing to the fact that there is provided a data inputting device for inputting or deleting at least part of data defining the performance procedures in response to an operation performed by a player, and a performance operation instructing device for instructing the player to perform predetermined performance operations based on the data input through the data inputting device, the player can form the data by him or herself, and can enjoy the game more actively.

Sine the game system comprises a data editing device for editing data defining the performance procedures according to an operation of the player, and a performance operation instructing device for instructing predetermined performance operations based on the data edited by the data editing device, the player can form the data at will and have a greater feeling of satisfaction in the game.

The system comprises a data forming device for newly forming data defining the performance procedures according to an operation of the player, and a performance operation instructing device for instructing the player to do predetermined performance operations based on the data newly formed through the data forming device. Therefore, the player can form the data at will and enjoy the game with an exciting feeling.

Predetermined performance operations can be taught the player based on the data input responsively to the player's operation, resulting in that the player can form the data at will and have a positive attitude in pursuing fan at the game.

It is possible to teach the player predetermined performance operations based on the data edited in response to the player's operations. This allows the player to form the data by him or herself and to have more fun at the game.

It is also possible to give the player instructions about predetermined performance operations based on the data newly formed in response to the player's operations, thereby allowing the player to form the data at will and enjoy the game more satisfactorily.

Although the description above contains many specificities, these should not be construed as limiting the scope of the invention but as merely providing illustrations of some of the presently preferred embodiments of this invention. Thus the scope of this invention should be determined by the appended claims and their equivalents.

## Claims

1. A game system (1) comprising:
a data storage device (32) for memorizing data for replaying music and data defining performance procedures for the music;
a performance operating device (52) for receiving performance operations of a player;
a music replaying device (30) for replaying the music based on the data for replaying the music;
a performance operation instructing device (100) for instructing the player to input performance operations associated with the replay of the music based on the data defining the performance procedures;
a performance effect generating device (11) for generating performance effects corresponding to said performance operations
**characterised by**:
a data inputting device (52) for inputting or deleting at least part of the data defining the performance procedures in response to operations of the player, and in that
the data formed through the data inputting device are stored into the data storage device and the performance operation instructing device instructs the player to do predetermined performance operations based on the data input through the data inputting device.

2. The game system (1) according to claim 1, further comprising a device (31) for a plurality of types of sound effects to be generated as the performance effects.

3. The game system (1) according to claim 2, wherein one type of the sound effects to be generated as the performance effects can be selected in accordance with an operation of the player when the data defining the performance procedures are input through the data inputting device (52).

4. The game system (1) according to claim 3, wherein a selected sound effect can be replayed when said one type of the sound effects is selected in accordance with the operation of the player.

5. The game system (1) according to any one of claims 1 to 4, further comprising an indicating device (100) for showing a position residing in the music to be subjected to input or deletion of the data, when the data defining the performance procedures are input or deleted in a piece of the music by the player through the data inputting device (52).

6. The game system (1) according to any one of claim 1 to 5, wherein the replaying device (30) replays the sound effects based on the data defining the performance procedures when the data defining the performance procedures are input or deleted through the data inputting device (52).

7. The game system (1) according to claim 6, wherein the replaying device (30) can replay a series of the sound effects to be used as the performance effects after completing the operations of the player to input or delete the data defining the performance procedures.

8. The game system (1) according to claim 7, wherein the replaying device (30) can replay the sound effects with mixing the music.

9. The game system (1) according to claim 7 or 8, further comprising a range setting device (11) for setting, in accordance with an operation of the player, a range of the sound effects to be replayed through the replaying device to an extent corresponding to at least part of a piece of the music.

10. The game system (1) according to claim 6, wherein the data inputting device (52) is constructed such that the data are input by making the player repeat operations of assigning the respective sound effects corresponding to each of the performance operations composing the performance procedures, and the replaying device (30) can replay each of the input sound effects every time the player assigns the sound effects to each of the performance operations.

11. The game system (1) according to any one of claims 1 to 10, wherein the data storage device (32) memorizes data defining a plurality of sets of the performance procedures for one piece of the music.

12. The game system (1) according to any one of claims 1 to 11, wherein the data memorized in the data storage device (32) and defining the performance procedures corresponding to a specific piece of the music are all input through the data inputting device (52).

13. The game system according to any one of claims 1 to 12, wherein the performance operating device (52) can be used as the data inputting device (52) and the performance operations instructed through the performance operation instructing device are the same as player's operations performed in inputting the data defining the performance procedures.

14. The game system (1) according to any one of claims 1 to 13, further comprising:
an input-position pointing device for indicating a position in a piece of the music at which the data are input or deleted, when the player inputs or deletes the data defining the performance procedures corresponding to the piece of the music through the data inputting device; and
an indicator having at least one track extending in a specified direction,
wherein the performance operation instructing device (100) displays, based on the data defining the performance procedures, an indication mark to indicate operation timing of the performance operating device within the indicator in such a manner that the indication mark moves along the track and then reaches a performance operation position fixedly set at a specified location of the track when the operation timing of the performance operating device corresponding to the indication mark comes, and
the input-position pointing device displays, within the indicators, a pointing mark to show a position existing in the music at which the data are input or deleted in such a manner that the pointing mark moves along the track and is located at an input-operation position fixedly set at a specified location of the track when the data inputting device is operated correspondingly to the pointing mark.

15. A computer-readable storage medium (44) storing data for replaying music, data defining performance procedures for the music, and a program for performing a predetermined music performing game based on both of the data, the program being formed to allow a computer to perform the following steps of:
replaying the music based on the data for replaying the music;
instructing a player to input performance operations associated with the replay of the music to a performance operating device (52) based on the data defining the performance procedures for the music;
generating performance effects corresponding to said performance operations and **characterised by** the steps of:
inputting or deleting at least part of the data defining the performance procedures and memorizing an input or deleted result data in response to operations of the player; and
pointing predetermined performance operations to the player based on the memorized data.

## Patentansprüche

1. Spielsystem (1), das umfasst:
eine Datenspeichervorrichtung (32) zum Speichern von Daten zum Abspielen von Musik und Daten, die Darbietungs-Prozeduren für die Musik definieren;
eine Darbietungs-Betätigungsvorrichtung (52) zum Empfangen von Darbietungs-Betätigungen eines Spielers;
eine Musik-Abspielvorrichtung (30) zum Abspielen der Musik auf Basis der Daten zum Abspielen der Musik;
eine Darbietungs-Betätigungs-Anweisungsvorrichtung (100), die den Spieler auf Basis von Daten, die die Darbietungs-Prozeduren definieren, anweist, mit dem Abspielen der Musik verbundene Darbietungs-Betätigungen einzugeben;
eine Darbietungseffekt-Erzeugurrgsvorrichtung (11), die Darbietungseffekte erzeugt, die den Darbietungs-Betätigungen entsprechen;
**gekennzeichnet durch:**
eine Dateneingabevorrichtung (52) zum Eingeben oder Löschen wenigstens eines Teils der Daten, die die Darbietungs-Prozeduren definieren, in Reaktion auf Betätigungen des Spielers, und **dadurch**, dass:
die über die Dateneingabevorrichtung erzeugten Daten in der Datenspeichervorrichtung gespeichert werden, und die Darbietungs-Betätigungs-Anweisungsvorrichtung den Spieler auf Basis der über die Dateneingabevorrichtung eingegebenen Daten anweist, die vorgegebenen Darbietungs-Betätigungen vorzunehmen.

2. Spielsystern (1) nach Anspruch 1, das des Weiteren eine Vorrichtung (31) für eine Vielzahl von Typen von Klangeffekten umfasst, die zu erzeugen sind, wenn die Darbietung stattfindet.

3. Spielsystem (1) nach Anspruch 2, wobei ein Typ der Klangeffekte, die zu erzeugen sind, wenn die Darbietung stattfindet, entsprechend einer Betätigung des Spielers ausgewählt werden kann, wenn die Daten, die die Darbietungs-Prozeduren definieren, über die Dateneingabevorrichtung (52) eingegeben werden.

4. Spielsystern (1) nach Anspruch 3, wobei ein ausgewählter Klangeffekt abgespielt werden kann, wenn der eine Typ der Klangeffekte entsprechend der Betätigung des Spielers ausgewählt wird.

5. Spielsystem (1) nach einem der Ansprüche 1 bis 4, das des Weiteren eine Anzeigevorrichtung (100) umfasst, die eine Position zeigt, die in der Musik liegt, die Eingeben oder Löschen der Daten zu unterziehen ist, wenn die Daten, die die Darbietungs-Prozeduren definieren, in einem Musikstück von dem Spieler über die Dateneingabevorrichtung (52) eingegeben oder gelöscht werden.

6. Spielsystem (1) nach einem der Ansprüche 1 bis 5, wobei die Abspielvorrichtung (30) die Klangeffekte auf Basis der Daten abspielt, die die Darbietungs-Prozeduren definieren, wenn die Daten, die die Darbietungs-Prozeduren definieren, über die Dateneingabevorrichtung (52) eingegeben oder gelöscht werden.

7. Spielsystem (1) nach Anspruch 6, wobei die Abspielvorrichtung (30) eine Reihe der Klangeffekte abspielen kann, um sie zu verwenden, wenn die Darbietung stattfindet, nachdem die Betätigungen des Spieler zum Eingeben oder Löschen der Daten, die die Darbietungs-Prozeduren definieren, abschlossen sind.

8. Spielsystem (1) nach Anspruch 7, wobei die Abspielvorrichtung (30) die Klangeffekte mit der Musik gemischt abspielen kann.

9. Spielsystem (1) nach Anspruch 7 oder 8, das des Weiteren eine Bereich-Einstellvorrichtung (11) umfasst, mit der entsprechend einer Betätigung des Spielers ein Bereich über die Abspielvorrichtung abzuspielender Klangeffekte auf eine Ausdehnung festgelegt wird, die wenigstens einem Teil eines Musikstücks entspricht.

10. Spielsystem (1) nach Anspruch 6, wobei die Dateneingabevorrichtung (52) so aufgebaut ist, dass die Daten eingegeben werden, indem der Spieler veranlasst wird, Betätigungen des Zuweisens der jeweiligen Klangeffekte, die jeder der Darbietungs-Betätigungen entsprechen, die die Darbietungs-Prozeduren bilden, zu wiederholen, und die Abspielvorrichtung (30) jeden der eingegebenen Klangeffekte immer dann abspielen kann, wenn der Spieler die Klangeffekte jeder der Darbietungsbetätigungen zuweist.

11. Spielsystem (1) nach einem der Ansprüche 1 bis 10, wobei die Datenspeichervorrichtung (32) Daten speichert, die eine Vielzahl von Sätzen der Darbietungs-Prozeduren für ein Musikstück definieren.

12. Spielsystem (1) nach einem der Ansprüche 1 bis 11, wobei die Daten, die in der Datenspeichervorrichtung (32) gespeichert sind und die Darbietungs-Prozeduren definieren, die einem bestimmten Musikstück entsprechen, sämtlich über die Dateneingabevorrichtung (52) eingegeben werden.

13. Spielsystem (1) nach einem der Ansprüche 1 bis 12, wobei die Darbietungs-Betätigungsvorrichtung (52) als die Dateneingabevorrichtung (52) verwendet werden kann und die über die Darbietungs-Betätigungs-Anweisungsvorrichtung angewiesenen Darbietungs-Betätigungen die gleichen sind wie die Betätigungen des Spielers, die beim Eingeben der Daten ausgeführt werden, die die Darbietungs-Prozeduren definieren.

14. Spielsystem (1) nach einem der Ansprüche 1 bis 13, das des Weiteren umfasst:
eine Eingabepositions-Zeigevorrichtung, die eine Position in einem Musikstück anzeigt, an der die Daten eingegeben oder gelöscht werden, wenn der Spieler die Daten, die die Darbietungs-Prozeduren definieren, die dem Musikstück entsprechen, über die Dateneingabevorrichtung eingibt oder löscht; und
eine Anzeigeeinrichtung, die wenigstens eine Spur hat, die in einer vorgegebenen Richtung verläuft,
wobei die Darbietungs-Betätigungs-Anweisungsvorrichtung (100) auf Basis der Daten, die die Darbietungs-Prozeduren definieren, eine Anzeigemarkierung anzeigt, die den Betätigungszeitpunkt der Darbietungs-Betätigungsvorrichtung in der Anzeigeeinrichtung so anzeigt, dass sich die Anzeigemarkierung auf der Spur bewegt und dann eine Darbietungs-Betätigungsposition erreicht, die an einer angegebenen Position der Spur fest eingestellt ist, wenn der Betätigungszeitpunkt der Darbietungs-Betätigungsvorrichtung, der der Anzeigemarkierung entspricht, erreicht ist, und
die Eingabepositions-Zeigevorrichtung innerhalb der Anzeigeeinrichtungen eine Zeigemarkierung anzeigt, die eine in der Musik vorhandene Position, an der Daten eingegeben oder gelöscht werden, so anzeigt, dass sich die Zeigemarkierung auf der Bahn entlang bewegt und sich an einer Eingabe-Betätigungsposition befindet, die an einer vorgegebenen Position der Spur fest eingestellt ist, wenn die Dateneingabevorrichtung entsprechend der Zeigemarkierung betätigt wird.

15. Computerlesbares Speichermedium (44), das Daten zum Abspielen von Musik, Daten, die Darbietungs-Prozeduren für die Musik definieren, und ein Programm zum Darbieten eines vorgegebenen Musikdarbietungsspiels auf Basis beider Daten speichert, wobei das Programm so ausgeführt ist, dass es einem Computer ermöglicht, die folgenden Schritte durchzuführen:
Abspielen der Musik auf Basis der Daten zum Abspielen der Musik;
Anweisen eines Spielers auf Basis der Daten, die die Darbietungs-Prozeduren für die Musik definieren, Darbietungs-Betätigungen, die mit dem Abspielen der Musik verbunden sind, in eine Darbietungs-Betätigungsvorrichtung (52) einzugeben;
Erzeugen von Darbietungseffekten, die den Darbietungs-Betätigungen entsprechen, **gekennzeichnet durch** die folgenden Schritte:
Eingeben oder Löschen wenigstens eines Teils der Daten, die die Darbietungs-Prozeduren definieren und Speichern eingegebener oder gelöschter Ergebnisdaten in Reaktion auf Betätigungen des Spielers; und
Zeigen vorgegebener Darbietungsbetätigungen für den Spieler auf Basis der gespeicherten Daten.

## Revendications

1. Système de jeu (1) comprenant :
un dispositif de stockage de données (32) pour mémoriser des données pour une relecture de musique et de données définissant des procédures de prestation pour la musique ;
un dispositif d'actionnement de prestation (52) pour recevoir des opérations de prestation d'un joueur ;
un dispositif de relecture de musique (30) pour relire la musique sur la base des données pour relire la musique ;
un dispositif d'instruction d'opération de prestation (100) pour demander en instruction au joueur d'entrer des opérations de prestation associées à la relecture de la musique sur la base des données définissant les procédures de prestation ;
un dispositif de génération d'effets de prestation (11) pour générer des effets de prestation correspondant auxdites opérations de prestation,
**caractérisé par** :
un dispositif d'entrée de données (52) pour entrer ou supprimer au moins une partie des données définissant les procédures de prestation en réponse à des opérations du joueur ;
et en ce que :
les données qui sont formées par l'intermédiaire du dispositif d'entrée de données sont stockées dans le dispositif de stockage de données et le dispositif d'instruction d'opération de prestation demande en instruction au joueur de réaliser des opérations de prestation prédéterminées sur la base des données qui sont entrées par l'intermédiaire du dispositif d'entrée de données.

2. Système de jeu (1) selon la revendication 1, comprenant en outre un dispositif (31) pour une pluralité de types d'effets de son à générer en tant qu'effets de prestation.

3. Système de jeu (1) selon la revendication 2, dans lequel un type d'effets de son à générer en tant qu'effets de prestation peut être sélectionné conformément à une opération du joueur lorsque les données définissant les procédures de prestation sont entrées par l'intermédiaire du dispositif d'entrée de données (52).

4. Système de jeu (1) selon la revendication 3, dans lequel un effet de son sélectionné peut être relu lorsque ledit un type des effets de son est sélectionné conformément à l'opération du joueur.

5. Système de jeu (1) selon l'une quelconque des revendications 1 à 4, comprenant en outre un dispositif d'indication (100) pour présenter une position résidant dans la musique à soumettre à une entrée ou à une suppression des données, lorsque les données définissant les procédures de prestation sont entrées ou supprimées dans un morceau de la musique par le joueur par l'intermédiaire du dispositif d'entrée de données (52).

6. Système de jeu (1) selon l'une quelconque des revendications 1 à 5, dans lequel le dispositif de relecture (30) relit les effets de son sur la base des données définissant les procédures de prestation lorsque les données définissant les procédures de prestation sont entrées ou sont supprimées par l'intermédiaire du dispositif d'entrée de données (52).

7. Système de jeu (1) selon la revendication 6, dans lequel le dispositif de relecture (30) peut relire une série des effets de son à utiliser en tant qu'effets de prestation après la menée à terme des opérations du joueur pour entrer ou supprimer les données définissant les procédures de prestation.

8. Système de jeu (1) selon la revendication 7, dans lequel le dispositif de relecture (30) peut relire les effets de son avec mélange de la musique.

9. Système de jeu (1) selon la revendication 7 ou 8, comprenant en outre un dispositif d'établissement de plage (11) pour établir, conformément à une opération du joueur, une plage des effets de son à relire par l'intermédiaire du dispositif de relecture jusqu'à une étendue correspondant à au moins une partie d'un morceau de la musique.

10. Système de jeu (1) selon la revendication 6, dans lequel le dispositif d'entrée de données (52) est construit de telle sorte que les données soient entrées en faisant en sorte que le joueur répète des opérations d'assignation des effets de son respectifs correspondant à chacune des opérations de prestation composant les procédures de prestation, et le dispositif de relecture (30) peut relire chacun des effets de son d'entrée chaque fois que le joueur assigne les effets de son à chacune des opérations de prestation.

11. Système de jeu (1) selon t'une quelconque des revendications 1 à 10, dans lequel le dispositif de stockage de données (32) mémorise des données qui définissent une pluralité d'établissements des procédures de prestation pour un morceau de la musique.

12. Système de jeu (1) selon l'une quelconque des revendications 1 à 11, dans lequel les données mémorisées dans le dispositif de stockage de données (32) et définissant les procédures de prestation correspondant à un morceau spécifique de la musique sont toutes entrées par l'intermédiaire du dispositif d'entrée de données (52).

13. Système de jeu (1) selon l'une quelconque des revendications 1 à 12, dans lequel le dispositif d'actionnement de prestation (52) peut être utilisé en tant que dispositif d'entrée de données (52) et les opérations de prestation demandées en instruction par l'intermédiaire du dispositif d'instruction d'opération de prestation sont les mêmes que les opérations du joueur réalisées lors de l'entrée des données définissant les procédures de prestation.

14. Système de jeu (1) selon l'une quelconque des revendications 1 à 13, comprenant en outre :
un dispositif de pointage de position d'entrée pour indiquer une position dans un morceau de musique au niveau de laquelle les données sont entrées ou supprimées lorsque le joueur entre ou supprime les données définissant les procédures de prestation correspondant à la pièce de la musique par l'intermédiaire du dispositif d'entrée de données ; et
un indicateur qui comporte au moins une piste s'étendant suivant une direction spécifiée,
dans lequel le dispositif d'instruction d'opération de prestation (100) affiche, sur la base des données définissant les procédures de prestation, une marque d'indication pour indiquer un cadencement opératoire du dispositif d'actionnement de prestation dans l'indicateur de telle sorte que la marque d'indication se déplace le long de la piste puis atteigne une position d'opération de prestation établie de façon fixe au niveau d'une localisation spécifiée de la piste lorsque le cadencement opératoire du dispositif d'actionnement de prestation correspondant à la marque d'indication arrive ; et
le dispositif de pointage de position d'entrée affiche, à l'intérieur des indicateurs, une marque de pointage pour présenter une position existant dans la musique au niveau de laquelle les données sont entrées ou supprimées de telle sorte que la marque de pointage se déplace le long de la piste et soit localisée en une position d'opération d'entrée établie de façon fixe en une localisation spécifiée de la piste lorsque le dispositif d'entrée de données est actionné en correspondance avec la marque de pointage.

15. Support de stockage lisible par ordinateur (44) qui stocke des données pour relire de la musique, des données qui définissent des procédures de prestation pour la musique et un programme pour réaliser un jeu de réalisation de musique prédéterminé sur la base des deux jeux de données, le programme étant formé pour permettre à un ordinateur de réaliser les étapes qui suivent de :
relecture de la musique sur la base des données pour relire de la musique ;
instruction à un joueur d'entrer des opérations de prestation associées à la relecture de la musique sur un dispositif d'actionnement de prestation (52) sur la base des données qui définissent des procédures de prestation pour la musique ;
génération d'effets de prestation correspondant auxdites opérations de prestation ; et **caractérisé par** les étapes de :
entrée ou suppression d'au moins une partie des données définissant les procédures de prestation et mémorisation de données de résultat d'entrée ou de suppression en réponse aux opérations du joueur ; et
pointage d'opérations de prestation prédéterminées pour le joueur sur la base des données mémorisées.
